# EUROPÄISCHE PATENTSCHRIFT

(11) **EP 1 375 279 B1**
(45) Veröffentlichungstag und Bekanntmachung des Hinweises auf die Patenterteilung: **31.08.2005**
(21) Anmeldenummer: 03013274.0
(22) Anmeldetag: 12.06.2003
(51) Int. Cl.: B60T 7/20, B60T 8/00, B60T 13/14

(54) **Verfahren und Vorrichtung zur Verringerung von Schlingerbewegungen eines auflaufgebremsten Anhängers**
Method and apparatus for reducing rolling motion of a trailer provided with an over-run braking system
Procédé et dispositif pour réduire des mouvements d'oscillation d'un remorque pourvu d'un système de freinage par inertie

(30) Priorität: 20.06.2002 DE 10227616
(43) Veröffentlichungstag der Anmeldung: 02.01.2004
(73) Patentinhaber: Knott GmbH, D-83125 Eggstätt (DE)
(72) Erfinder: Knott, Valentin, 83254 Breitbrunn (DE); Strasser, Josef, 83254 Breitbrunn (DE)
(74) Vertreter: Bauer, Friedrich

(56) Entgegenhaltungen:
- DE-A- 10 048 418
- DE-A- 19 964 048
- US-A- 4 842 340
- US-B1- 6 186 602

## Beschreibung

Die Erfindung betrifft eine Vorrichtung zur Verringerung von Schlingerbewegungen eines auflaufgebremsten Anhängers gemäß dem Oberbegriff des Anspruchs 1.

Bei Anhängern, beispielsweise Caravan-, Boots- oder Marktanhängern besteht das Problem, dass insbesondere bei schnellerer Fahrgeschwindigkeit Schlingerbewegungen, d.h. Gierbewegungen um eine Hochachse, auftreten können. Derartige Schlingerbewegungen können zu gefährlichen Fahrsituationen führen, beispielsweise zum seitlichen Ausbrechen des Anhängers oder zu beträchtlichen Fahrinstabilitäten des Zugfahrzeuges, beispielsweise PKW's.

Um derartigen Schlingerbewegungen entgegenzuwirken, sind bereits passive und aktive Schlingerunterdrückungssysteme entwickelt worden. Passive Systeme zielen darauf ab, durch Erhöhung des Zuspanndruckes die Reibung in der Kugelkopfkupplung zu erhöhen. Derartige passive Systeme funktionieren jedoch nur bis zu einem bestimmten Grad. Bei einem bekannten aktiven System werden dagegen Schlingerbewegungen von einem im Anhänger angeordneten Gierratensensor erfasst, der im Bedarfsfall veranlasst, dass die Radbremsen des Anhängers gleichmäßig betätigt werden. Hierdurch soll das Gespann etwas gestreckt und zusammen mit der Geschwindigkeitsverringerung die Schlingerbewegung unterdrückt werden. Die Effektivität dieses bekannten Systems ist jedoch auch nur begrenzt. Weiterhin kann dort infolge von Wankbewegungen leicht der Kraftschlussbeiwert eines Rades zur Straße überschritten werden, so dass es zum Blockieren des Rades kommen kann und keine weiteren Seitenkräfte mehr übertragen werden können.

Aus der US-B1-6 186 602 ist eine Vorrichtung gemäß dem Oberbegriff des Anspruches 1 bekannt, die für einen Bremsschlupfregelbetrieb geeignet sein soll. Weiterhin wird dort allgemein darauf hingewiesen, dass die automatische Bremsdruckerzeugung auch zum Stabilisieren des Fahrzeuges um seine Hochachse nutzbar ist.

Aus der DE 199 64 048 A1 ist eine Vorrichtung zum Stabilisieren eines Straßenfahrzeugs, insbesondere eines Personenkraftwagens, mit einem durch das Straßenfahrzeug gezogenen Anhänger bekannt, wobei das Straßenfahrzeug in Bezug auf Schlingerbewegungen überwacht und dem Straßenfahrzeug bei Erkennen einer Schlingerbewegung automatisch ein im Wesentlichen periodisches Giermoment eingeprägt wird, das der Schlingerbewegung im Wesentlichen gegenphasig ist.

Aus der DE 100 48 418 A1 ist ein Verfahren zur Stabilisierung eines Fahrzeugs bekannt, wobei ein sich periodisch veränderndes Giermoment durch wechselseitigen Bremseingriff auf das Fahrzeug aufgebracht wird.

Aus der US-A-4 842 340 ist eine Bremsschlupfregelung für Fahrzeuganhänger bekannt.

Der Erfindung liegt von daher die Aufgabe zugrunde, eine Vorrichtung der eingangs genannten Art zu schaffen, mit der auf einfache Weise bei Aufrechterhaltung einer hohen Bremsstabilität Schlingerbewegungen von auflaufgebremsten Anhängern unterbunden bzw. verringert werden können.

Diese Aufgabe wird erfindungsgemäß durch die Vorrichtung gemäß dem Anspruch 1 gelöst. Vorteilhafte Ausführungsformen der Erfindung sind in den weiteren Ansprüchen beschrieben.

Gemäß der erfindungsgemäßen Vorrichtung wird eine Kombination einer die beiden Seiten des Anhängers im Fall von Schlingerbewegungen individuell abbremsenden elektronisch-hydraulischen Stabilisierungseinrichtung (EHS) und einem Antiblockiersystem (ABS) verwendet. Die elektronisch-hydraulische Stabilisierungseinrichtung weist für jede der beiden Seiten des Anhängers mindestens einen Kolben und einen von dem jeweiligen Kolben beaufschlagbaren EHS-Zusatzdruckölspeicher auf, der mit der Bremsleitung der zugehörigen Anhängerseite in Verbindung steht. Hierbei ist der EHS-Kolben von einer ersten Stellung, in der er keinen Zusatzdruck im EHS-Zusatzöldruckspeicher und damit in der zugeordneten Bremsleitung erzeugt, in eine zweite Stellung verfahrbar, in der er Drucköl aus dem EHS-Zusatzdruckölspeicher in die zugeordnete Bremsleitung drückt und damit die entsprechende Radbremse betätigt, wobei die Betätigung des EHS-Kolbens in Abhängigkeit der vom Gierratensensor abgegebenen Signale und über EHS-Öldrucksteuerleitungen erfolgt, die von den Bremsleitungen getrennt sind. Der EHS-Kolben, der beispielsweise ein Plungerkolben sein kann, stellt somit einen Zusatzkolben dar, der unabhängig vom Hauptzylinder zusätzlichen Bremsdruck in der Bremsleitung der jeweiligen Anhängerseite erzeugen kann, wenn der Gierratensensor eine Schlingerbewegung meldet. Für jede Fahrzeugseite ist somit mindestens ein EHS-Kolben vorhanden.

Mit der erfindungsgemäßen Stabilisierungseinrichtung werden beim Auftreten von Schlingerbewegungen die rechte und linke Seite des Anhängers in unterschiedlicher, der Schlingerbewegung entgegenwirkender Weise abgebremst. Durch eine gezielte und differenzierte Ansteuerung der Radbremsen kann somit ein der Schlingerbewegung entgegenwirkendes Drehmoment erzeugt werden, das den Anhänger zurück in die Spur drückt. Die einzusteuernden Bremsdrücke an den Radbremsen hängen hierbei insbesondere vom gemessenen Druck am Hauptzylinder der Auflaufeinrichtung, d.h. von der Schubkraft des Anhängers, und den Kraftschlussbeiwerten der einzelnen Räder ab. Die beiden Seiten des Anhängers werden somit nicht gleichmäßig, sondern unterschiedlich stark abgebremst, so dass ein Gegenmoment um eine Hochachse des Anhängers erzeugt wird, das der Schlingerbewegung entgegenwirkt.

Zweckmäßigerweise werden beim Auftreten von Schlingerbewegungen beide Seiten des Anhängers abgebremst, wobei jedoch das kurveninnere Rad stärker als das kurvenäußere Rad abgebremst wird. Hierdurch wird ein der Schlingerbewegung entgegenwirkendes Drehmoment erzeugt, wobei jedoch gleichzeitig, da beide Seiten des Anhängers abgebremst werden, das Gespann gestreckt und die Geschwindigkeit verlangsamt wird. Hierdurch lässt sich auf besonders schneller Weise wieder ein stabiler Fahrzustand erreichen. Vorteilhaft ist hierbei auch, dass bei Schlingerbewegungen - anders als beim normalen Kurvenfahren - in der Regel das kurveninnere Rad stärker auf den Boden gedrückt wird, da der Aufbau des Anhängers das darunter liegende Fahrgestell in die jeweilige Schräglage seitlich nach außen zieht. Hierdurch können größere Bremskräfte über das kurveninnere Rad auf die Straße übertragen werden.

Das mit der elektronisch-hydraulischen Stabilisierungseinrichtung (EHS) kombinierte Antiblockiersystem (ABS) weist für jede Anhängerseite mindestens einen ABS-Kolben auf, mit dem ein zugeordnetes, in der zur jeweiligen Radbremse führenden Bremsleitung angeordnetes Sperrventil betätigbar ist, so dass bei einem Blockieren des Rads die Zufuhr von Drucköl vom Hauptbremszylinder zur Radbremse gesperrt und der Rückfluss vom Drucköl aus der Radbremse in einen ABS-Zusatzdruckölspeicher ermöglicht wird. Dadurch, dass der Rückfluss vom Drucköl aus der Radbremse in den ABS-Zusatzdruckölspeicher beim Blockieren des Rades ermöglicht wird, wird auf sehr schnelle und einfache Weise der Bremsdruck an der zugeordneten Radbremse abgebaut, so dass sich das Rad wieder drehen kann. Die Kombination eines derartigen Antiblockiersystems mit der elektronisch-hydraulischen Stabilisierungseinrichtung ist auch deswegen äußerst vorteilhaft, da durch den ABS- und EHS-Kolben auch im Fall einer absichtlichen Rückwärtsfahrt des auflaufgebremsten Anhängers der Bremsdruck an den Radbremsen auf einfache Weise dadurch abgebaut werden kann, dass diese Kolben in diejenige Stellung zurückgezogen werden, in welcher die den Kolben zugeordneten Zusatzdruckölspeicher eine maximale Menge an Drucköl aufnehmen können. Die Kolben "saugen" hierbei Drucköl aus den Bremsleitungen ab, so dass die Radbremsen beim absichtlichen Rückwärtsfahren nicht betätigt bzw. sofort wieder gelöst werden. Auf komplizierte Ventileinrichtungen im hydraulischen Bremskreislauf kann dadurch verzichtet werden. Weiterhin wird durch die absolute Trennung zwischen den hydraulischen Steuerkreisläufen und den Bremsleitungen ein hohes Maß an Ausfall- und Betriebssicherheit erreicht. Das Problem der immerwährenden Bremsbereitschaft wird deutlich verbessert, da auch bei häufigen Schaltvorgängen, d.h. bei einem wiederholten Zurückstoßen des Gespanns, kein Druckölvolumen aus dem Bremskreis entnommen und zurück in den Vorratstank des Hauptzylinders entlassen wird. Zusätzliche Schutzvorrichtungen, die eine zu hohe Entnahme von Drucköl aus den Bremsleitungen bei häufigen Umschalten zwischen Vorwärts- und Rückwärtsfahrt vermeiden helfen, werden damit überflüssig.

Gemäß einer vorteilhaften Ausführungsform ist der EHS-Kolben in einem EHS-Zylinder angeordnet, der den EHS-Zusatzdruckölspeicher enthält, wobei der EHS-Kolben mittels einer Feder in eine den EHS-Zusatzdruckölspeicher maximierende Ausgangsstellung vorgespannt ist. "Maximierend" bedeutet hierbei, dass der EHS-Zusatzdruckölspeicher in diejenige Stellung vorgespannt wird, in der er das maximale Aufnahmevolumen für Drucköl besitzt. Wird der EHS-Kolben so verfahren, dass der EHS-Zusatzdruckölspeicher verkleinert wird, wird somit das im EHS-Zusatzdruckölspeicher vorhandene Drucköl in die Bremsleitung derjenigen Anhängerseite gedrückt, die abgebremst werden soll. Wird der EHS-Kolben wieder in der umgekehrten Richtung zurückgefahren und der EHS-Zusatzdruckölspeicher vergrößert, wird der Bremsleitung wieder Drucköl entnommen, wodurch der Druck in der zugeordneten Radbremse abgebaut und das Lösen der Radbremse unterstützt wird.

Gemäß einer vorteilhaften Ausführungsform ist dem EHS-Kolben ein elektromagnetisch betätigbares Mehrwegeventil vorgeschaltet, das beim Auspumpen des EHS-Zusatzdruckölspeichers den Rückfluss des Drucköls Richtung Hauptbremszylinder verhindert. Hierdurch wird sichergestellt, dass beim Auspumpen des EHS-Zusatzdruckölspeichers der Druck in demjenigen Teil der Bremsleitung erhöht wird, die zu der abzubremsenden Radbremse hin geöffnet ist, und der Zusatzdruck nicht Richtung Hauptbremszylinder abgebaut wird.

Vorteilhafterweise sind Radsensoren zur Überwachung der Drehgeschwindigkeit der einzelnen Räder vorgesehen. Die Betätigung der ABS-Kolben erfolgt in Abhängigkeit der von den Radsensoren abgegebenen Signale und über ABS-Öldrucksteuerleitungen, die von den Bremsleitungen getrennt sind.

Gemäß einer vorteilhaften Ausführungsform ist der ABS-Kolben in einem ABS-Zylinder angeordnet, das den ABS-Zusatzdruckölspeicher enthält. Der ABS-Kolben ist hierbei, vorzugsweise mittels einer Feder, in eine den ABS-Zusatzdruckölspeicher minimierende erste Stellung bewegbar, in welcher der ABS-Kolben das ABS-Sperrventil öffnet, so dass der Durchfluss von Drucköl zwischen Hauptbremszylinder und Radbremse freigegeben ist. Weiterhin ist der ABS-Kolben über die ABS-Druckölsteuerleitungen in eine zweite Stellung bewegbar, in welcher das ABS-Sperrventil die Bremsleitung verschließt und der ABS-Zusatzdruckölspeicher vergrößert ist, wobei der ABS-Zusatzdruckölspeicher mit den Radbremsen in Fluidverbindung ist.

Gemäß einer vorteilhaften Ausführungsform ist der ABS-Kolben in die die Bremsleitung offenhaltende erste Stellung mittels einer Feder vorgespannt, deren Vorspannkraft kleiner als die vom Drucköl beim maximal zulässigen Bremsdruck auf den ABS-Kolben aufgebrachte, der Federvorspannkraft entgegenwirkende Kraft ist. Gleichzeitig muss die Vorspannkraft dieser Feder gemäß den gesetzlichen Richtlinien mindestens dem 1,2-fachen Druck entsprechen, der notwendig ist, um eine 50%ige Verzögerung am Radumfang zu erzeugen. Hierdurch kann auf einfache Weise auf zusätzliche Bremsdruckbegrenzungselemente verzichtet werden, da in dem Fall, dass der Bremsdruck an den Radbremsen zu hoch wird, der ABS-Kolben zurückgedrückt und zusätzliches Speichervolumen im ABS-Zusatzdruckölspeicher bereitgestellt wird.

Gemäß einer vorteilhaften Ausführungsform sind die Radsensoren mit einer Drehrichtungserkennungseinrichtung ausgestattet. Die ABS-Kolben werden dabei im Fall des Rückwärtsfahrens des Anhängers über die ABS-Öldrucksteuerleitungen in die zweite Stellung verfahren, in der der ABS-Zusatzdruckölspeicher vergrößert ist.

Besonders vorteilhaft ist es, wenn beim Auftreten von Schlingerbewegungen zusätzlich auch die Zuspannkraft zwischen der Zugkugel und der Kugelkopfkupplung erhöht wird. Dies erfolgt zweckmäßigerweise dadurch, dass der Zuspanndruck in der hydraulischen Stabilisierungskupplung so angepasst wird, dass die Dämpfung ausreichend hoch wird, um den Schwingungsvorgang des Anhängers als aperiodischen Grenzfall abklingen zu lassen.

Die Erfindung wird nachfolgend anhand der Zeichnungen beispielhaft näher erläutert. Es zeigen:
- Figur 1:: eine schematische Darstellung der wichtigsten Komponenten der erfindungsgemäßen Brems- und Stabilisierungsvorrichtung, und
- Figur 2:: eine etwas vergrößerte Darstellung des Systems von Figur 1, wobei lediglich die linke Seite des Brems- und Steuerkreislaufes für den Anhänger dargestellt ist.

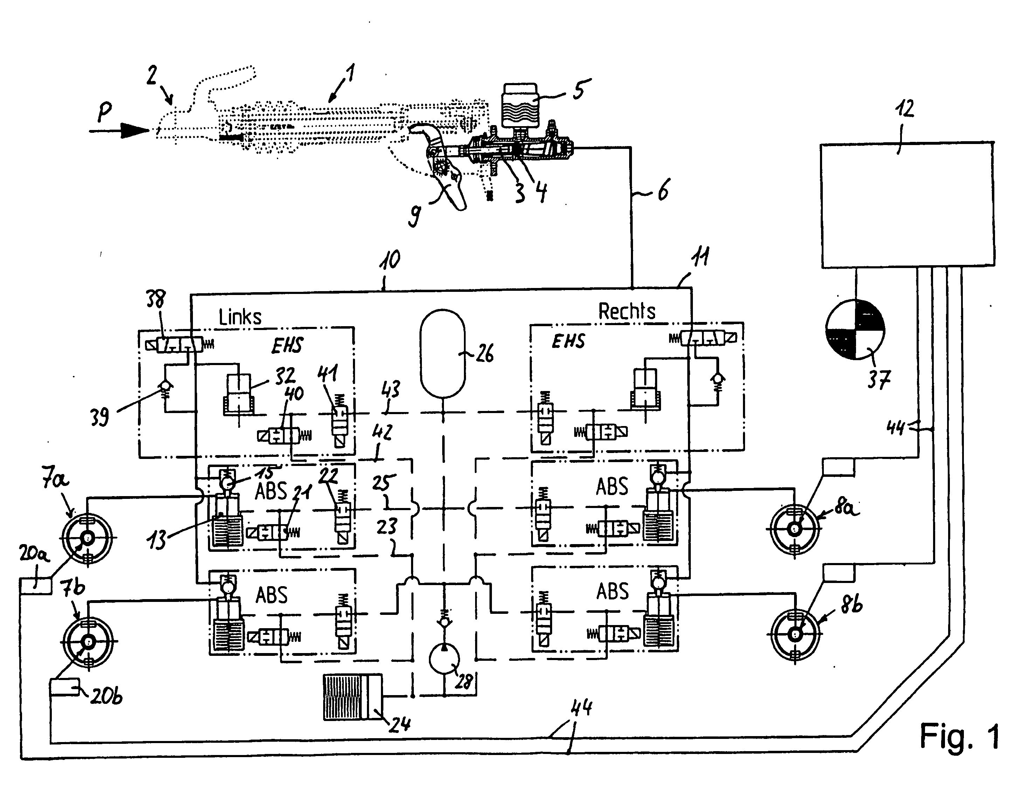

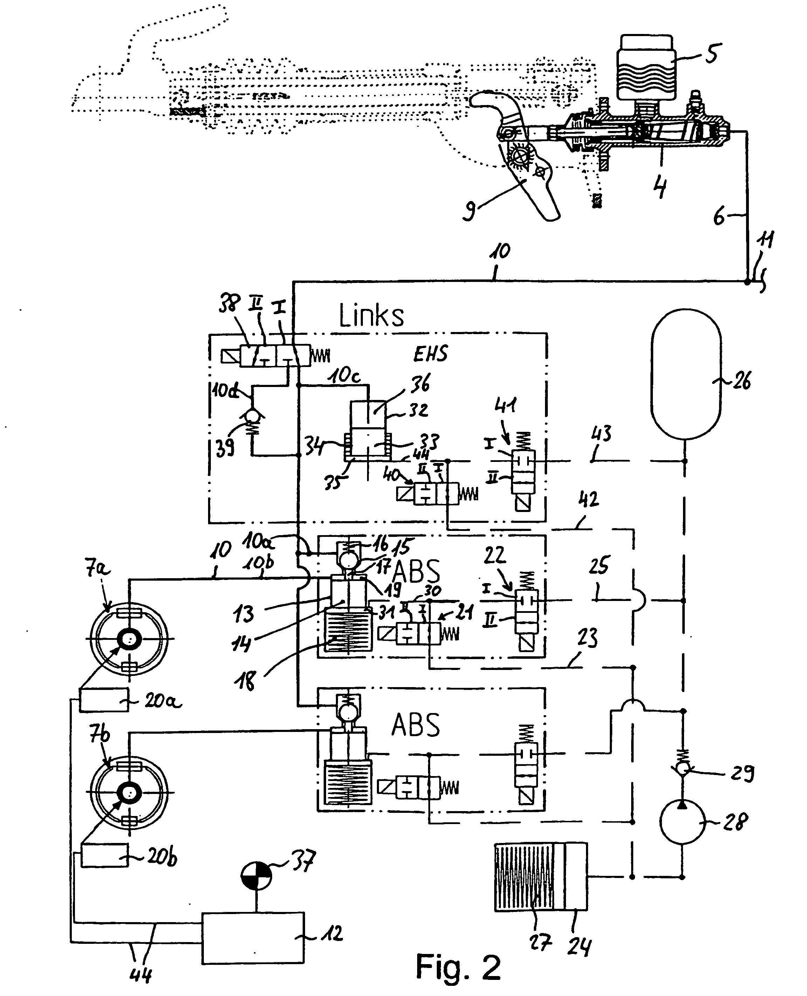

Aus den Figuren 1 und 2 ist gepunktet eine Anhängerdeichsel 1 eines nicht näher dargestellten Anhängers mit zwei Achsen, beispielsweise eines Tandemanhängers, ersichtlich. Die Anhängerdeichsel 1 weist an ihren vorderen Ende eine Kugelkopfkupplung 2 auf, mit der der Anhänger an einem nicht dargestellten Kugelkopf eines Zugfahrzeugs angehängt werden kann.

Der Anhänger verfügt über eine hydraulische Bremskraftübertragungseinrichtung mit einem Hauptbremszylinder 4, in dem ein Kolben 3 derart längsverschiebbar angeordnet ist, dass er bei einer Bewegung nach hinten, d.h. in den Figuren 1 und 2 nach rechts, Drucköl aus einem Vorratsbehälter 5 in eine Bremsleitung 6 drückt, die mit Radbremsen 7a, 7b, 8a, 8b des Anhängers in Fluidverbindung steht.

Wird das nicht dargestellte Zugfahrzeug abgebremst, wirkt auf die Kugelkopfkopfkupplung 2 eine Schubkraft P ein, wodurch eine innerhalb der Anhängerdeichsel 1 angeordnete Zugstange um einen gewissen Auflaufweg in den hinteren Deichselkörper eingeschoben wird. Das hintere Ende der Zugstange bewegt dabei einen Bremshebel 9 im Uhrzeigersinn, der wiederum den Kolben 3 des hydraulischen Hauptbremszylinders 4 nach hinten verschiebt.

Die Hauptbremsleitung 6 verzweigt in eine linke Bremsleitung 10 und in eine rechte Bremsleitung, um Bremsdruck auf die linksseiten Radbremsen 7a, 7b bzw. rechtsseitigen Radbremsen 8a, 8b aufzubringen.

Das in Figur 1 dargestellte Brems- und Stabilisierungssystem weist eine elektronisch-hydraulische Stabilisierungseinrichtung (EHS) sowie ein Antiblockiersystem (ABS) auf. Komponenten, die der elektronisch-hydraulischen Stabilisierungseinrichtung zuzuordnen sind, sind in den Zeichnungen mit einem mit EHS bezeichneten Rahmen umgeben. Komponenten, welche dem Antiblockiersystem zuzuordnen sind, sind mit ABS bezeichneten Rahmen umgeben. Die Bremsleitungen sind dabei mit durchgehenden Linien gezeichnet, während die hydraulischen Steuerleitungen gestrichelt dargestellt sind. Die elektrischen Leitungen, die zwischen einer elektronischen Steuereinrichtung 12 und den dargestellten, elektromagnetisch gesteuerten Mehrwegeventilen vorhanden sind, sind der Übersichtlichkeit halber nicht dargestellt.

Wie aus Figur 1 ersichtlich, ist das Hydrauliksystem bezüglich der linken und rechten Anhängerseite symmetrisch aufgebaut. Im Folgenden wird der Aufbau und die Funktion des Brems- und Stabilisierungssystems anhand der vergrößerten Darstellungen von Figur 2 in Bezug auf die linke Anhängerseite näher erläutert. Aufgrund der symmetrischen Anordnung gelten diese Ausführungen in gleicher Weise auch für die rechte Anhängerseite.

Zunächst wird das Antiblockiersystem ohne Berücksichtigung der elektronisch-hydraulischen Stabilisierungseinrichtung näher erläutert.

Das Antiblockiersystem weist für jede Radbremse 7a, 7b, 8a, 8b einen ABS-Zylinder 13 mit einem darin verschiebbar angeordneten ABS-Kolben 14 auf, um ein Sperrventil 15 in der Form eines Kugelrückschlagsventils zu betätigen. Die Bremsleitung 10 mündet mit einem Teilabschnitt 10a derart in das Gehäuse des Sperrventils 15, dass das vom Hauptbremszylinder 4 zu den Radbremsen 7a gepumpte Öl versucht, das Sperrventil 15 zu schließen. In diese Schließrichtung ist das Sperrventil 15 zusätzlich mittels einer Feder 16 vorgespannt. Der unterhalb des Sperrventils 15 angeordnete ABS-Kolben 14 weist jedoch an seiner Oberseite einen Stössel 17 auf, der die Kugel des Sperrventils 15 nach oben drückt und dadurch das Sperrventil 17 öffnet, wenn sich der ABS-Kolben 14 in der dargestellten oberen Position innerhalb des ABS-Zylinder 13 befindet. In diese obere Position ist der ABS-Kolben 14 mittels einer Feder 18 vorgespannt, die sich innerhalb des ABS-Zylinders 13 unterhalb des ABS-Kolbens 14 befindet und diesen nach oben drückt.

In der oberen Stellung des ABS-Kolbens 14 ist zwischen der Oberseite des ABS-Kolbens 14 und der oberen Stirnwand des ABS-Zylinders 13 noch ein Zwischenraum vorhanden, der als ABS-Zusatzdruckölspeicher 19 wirken kann und in den ein Abschnitt 10b der Bremsleitung 10 mündet. Der Abschnitt 10b führt direkt zur zugeordneten Radbremse 7a, 7b, 8a, 8b. Weiterhin ist der Zusatzdruckölspeicher 19 mit dem Gehäuse des Sperrventils 15 in Fluidverbindung, so dass dann, wenn sich der ABS-Kolben 14 in der oberen Stellung befindet und die Kugel des Sperrventils 15 nach oben drückt, eine durchgehende Fluidverbindung in beiden Richtungen zwischen dem Hauptbremszylinder 4 und den Radbremsen 7a, 7b, 8a, 8b vorhanden ist. In dieser Stellung, die in den Figuren 1 und 2 gezeigt ist, kann somit im Bremsfall das Drucköl vom Hauptbremszylinder 4 durch das Gehäuse des Sperrventils 15 und den Zusatzdruckölspeicher 19 innerhalb des Zylindergehäuses 13 hindurch zu den Radbremsen 7a, 7b (bzw. 8a, 8b) gepumpt werden, um diese hydraulisch zu betätigen.

Jedes Rad weist einen Radsensor 20a, 20b auf, um die Winkelgeschwindigkeit des Rads und damit auch ein Blockieren desselben erfassen zu können. Die Radsensoren 20a, 20b stehen mit der elektronischen Steuereinrichtung 12 über elektrische Leitungen 44 in Verbindung. Im Fall des Blockierens eines Rads veranlasst die elektronische Steuereinrichtung 12, dass der ABS-Kolben 14 entgegen der Vorspannkraft der Feder 18 nach unten verfahren wird. Hierdurch wird die Entsperrung des Sperrventils 15 aufgehoben, da auch der Stößel 17 nach unten fährt und dadurch die Kugel des Sperrventils 15 auf dem entsprechenden Ventilsitz aufsitzen kann. Die Zufuhr weiteren Drucköls aus dem Hauptbremszylinder 4 zu den Radbremsen 7a, 7b wird hierdurch unterbunden. Gleichzeitig vergrößert sich durch das Absenken des ABS-Kolbens 14 der Zusatzdruckölspeicher 19. Dies hat zur Folge, dass eine Saugwirkung auf den Abschnitt 10b der Bremsleitung 10 ausgeübt wird, welche das in diesem Abschnitt 10b befindliche Drucköl von den Radbremsen 7a, 7b, 8a, 8b abzieht und diese dadurch schlagartig entlastet.

Sobald die Radsensoren 20a, 20b an die elektronische Steuereinrichtung 12 ein Signal abgeben, dass sich das blockierte Rad wieder dreht, veranlasst die elektronische Steuereinrichtung 12, dass der ABS-Kolben 14 wieder nach oben gefahren wird, wodurch das Sperrventil 15 geöffnet und das Drucköl aus dem Zwischenraum 19 in die Bremsleitung 10 zurückgepumpt wird. Hierdurch erhöht sich wieder der Bremsdruck innerhalb der Bremsleitung 10, 11 und damit innerhalb der Radbremsen 7a, 7b, 8a, 8b so dass diese wieder in der gewünschten Weise betätigt werden.

Die Betätigung des ABS-Kolbens 14 erfolgt über zwei elektromagnetisch betätigbare Steuerventile 21, 22 in der Form von 2/2-Wegeventilen, die mit der elektronischen Steuereinrichtung 12 in elektrischer Verbindung stehen. Das Steuerventil 21 befindet sich in einer Steuerleitung 23, die zu einem Niederdruckspeicher 24 führt. Das Steuerventil 22 befindet sich dagegen in einer Steuerleitung 25, die zu einem Hochdruckspeicher 26 führt. Während im Niederdruckspeicher beispielsweise 5 bis 10 bar herrschen, beträgt der Druck im Hochdruckspeicher beispielsweise 100 bis 120 bar. Durch eine Feder 27 innerhalb des Niederdruckspeichers 24 werden Druckschwankungen ausgeglichen. Der Druck im Hochdruckspeicher 26 wird durch eine Pumpe 28 erzeugt, mit der Drucköl über ein Rückschlagventil 29 in den Hochdruckspeicher 26 gepumpt werden kann.

Beide Steuerleitungen 23, 25 münden nach den Steuerventilen 21, 22 in eine gemeinsame Steuerleitung 30, die zum ABS-Zylinder 13 führt. Die Steuerleitung 30 mündet dabei in einen Raum oberhalb eines Flansches 31 des ABS-Kolbens 14, der zum Zusatzdruckölspeicher 19 hin abgedichtet ist. Wird Drucköl aus der Steuerleitung 30 in den ABS-Zylinder 13 eingeleitet, wird somit der Flansch 31 und damit der ABS-Kolben 14 entgegen der Vorspannkraft der Feder 18 nach unten gedrückt. Verringert sich der Druck in der Steuerleitung 30 derart, dass die Vorspannkraft der Feder 18 den ABS-Kolben 14 wieder nach oben drücken kann, wird das zum Bewegen des ABS-Kolbens 14 verwendete Drucköl wieder durch die Steuerleitung 30 in die Steuerleitung 23 und von dort in den Niederdruckspeicher 24 zurückgeführt.

In den in Figur 2 gezeigten Ausgangsstellungen befindet sich das Steuerventil 21 in der Schaltstellung I, in der das Steuerventil 21 auf Durchgang geschaltet ist. Das Steuerventil 22 befindet sich ebenfalls in der Schaltstellung I, in der der Durchfluss durch die Steuerleitung 25 unterbunden ist. Aus dem Hochdruckspeicher 26 kann somit kein Drucköl zur Steuerleitung 30 und damit in den ABS-Zylinder 13 gepumpt werden. Der ABS-Kolben 14 bleibt durch die Vorspannkraft der Feder 18 in der gezeigten oberen, das SPerrventil 15 offenhaltenden Stellung, in der die Radbremsen 7a, 7b, 8a, 8b normal betätigt werden können.

Erkennt die elektronische Steuereinrichtung 12 dagegen ein Blockieren eines Rads, das die Aktivierung des Antiblockiersystems fordert, wird das Steuerventil 21 in die Stellung II verfahren, in der der Durchfluss durch die Steuerleitung 23 gesperrt ist. Das Steuerventil 22 wird ebenfalls in die Stellung II verfahren in der der Durchfluss durch die Steuerleitung 25 geöffnet ist, so dass Drucköl mit hohem Druck aus dem Hochdruckspeicher 26 in den Raum oberhalb des Flansches 31 des ABS-Zylinders 14 einströmen kann und diesen nach unten drückt. Hierdurch wird, wie vorstehend bereits erläutert, die Zufuhr weiteren Drucköls vom Hauptbremszylinder 4 zu den Radbremsen 7a, 7b, 8a, 8b gesperrt, wobei diese gleichzeitig wieder entlastet werden.

Wie ersichtlich, ist jeder Radbremse 7a, 7b, 8a, 8b ein eigenes ABS-System zugeordnet. Jedes dieser ABS-Systeme verfügt somit über entsprechende Sperrventile 15, ABS-Zylinder 13 und Steuerventile 21, 22. Hierbei sind die zweiten Radbremsen 7b, 8b der linken Seite parallel an die Bremsleitungen 10, 11 und die diesen zweiten Radbremsen 7b, 8b zugeordneten Steuerventile parallel an die Steuerleitungen 23, 25 der ersten Radbremsen 7a, 8a angeschlossen. Die Vorrichtung ist jedoch, wie gezeigt, derart ausgebildet, dass nur ein einziger Niederdruckspeicher 24, Pumpe 28, Rückschlagventil 29 und Hochdruckspeicher 26 für den gesamten Anhänger erforderlich sind.

Im Folgenden wird nun die elektronisch-hydraulische Stabilisierungseinrichtung näher beschrieben, die einem Schlingern des Anhängers durch individuelles Abbremsen der linken und/oder rechten Seite des Anhängers entgegenwirkt. Hierzu weist sowohl die linke als auch die rechte Seite des Anhängers jeweils mit EHS bezeichnete Komponenten auf, die unabhängig von den EHS-Komponenten der anderen Seite mittels der elektronischen Steuereinrichtung 12 angesteuert werden können. Im Folgenden wird anhand der Figur 1 das linksseitige EHS-System beschrieben, zu dem das rechtsseitige EHS-System identisch ist.

Wie aus Figur 2 ersichtlich, weist das EHS-System einen schematisch dargestellten EHS-Zylinder 32 auf, in dem ein EHS-Kolben 33 verschiebbar angeordnet ist. Der EHS-Kolben 33 ist durch eine Feder 34, welche auf einen unteren Flansch 35 des EHS-Kolbens 33 drückt, nach unten vorgespannt. Der sich oberhalb des EHS-Kolbens 33 befindende Zwischenraum bildet einen EHS-Zusatzdruckölspeicher 36. Dieser EHS-Zusatzdruckölspeicher 36 ist über einen Bremsleitungsabschnitt 10c mit der Bremsleitung 10 verbunden.

Die Stabilisierung eines schlingernden Anhängers erfolgt grundsätzlich so, dass dann, wenn über einen im Anhänger vorgesehenen Gierratensensor 37 unerwünschte Schlingerbewegungen erfasst werden, die elektronische Steuereinheit veranlasst, dass der EHS-Kolben 33 entgegen der Vorspannkraft der Feder 34 nach oben verfahren wird, um den EHS-Zusatzdruckölspeicher 36 zu verkleinern und das darin befindliche Drucköl über den Leitungsabschnitt 10c in die Bremsleitung 10 und dadurch in genau diejenige Radbremse 7a, 7b, 8a, 8b zu drücken, die abgebremst werden soll. Hierdurch wird unabhängig davon, ob die Auflaufbremse aktiv ist, d.h. ob über den Hauptbremszylinder 4 Drucköl zu der Radbremse 7a, 7b, 8a, 8b geleitet wird, allein durch den EHS-Zylinder 32 die gewünschte Radbremse 7a, 7b, 8a, 8b betätigt.

Um zu verhindern, dass beim Ausstoßen des Drucköls aus dem EHS-Zusatzdruckölspeicher 36 der Druck nach rückwärts in Richtung Hauptbremszylinder 4 abgebaut wird, ist vor dem Leitungsabschnitt 10c ein EHS-Mehrwegeventil 38 in der Bremsleitung 10 angeordnet. Es handelt sich hierbei um ein 3/2-Wegeventil, das elektromagnetisch über die elektronische Steuereinrichtung 12 betätigt werden kann. In der Stellung I, die in den Figuren dargestellt ist, ist das Mehrwegeventil 38 auf Durchgang geschaltet, wobei der Abschnitt der Bremsleitung 10, der vor dem Mehrwegeventil 38 liegt, direkt mit dem dahinter liegenden Abschnitt der Bremsleitung 10 und damit auch mit dem Abschnitt 10a verbunden ist. In dieser Schaltstellung kann das Drucköl in beiden Richtungen durch das Mehrwegeventil 38 fließen. Wird dagegen das Mehrwegeventil 38 in die Schaltstellung II geschaltet, wird der vor dem Mehrwegeventil 38 befindliche Abschnitt der Bremsleitung 10 mit einer Bypassleitung 10d verbunden, in der ein Rückschlagventil 39 vorgesehen ist. Dieses Rückschlagventil 39 ist so angeordnet, dass zwar Drucköl in Richtung Radbremsen 7a, 7b geleitet werden kann, nicht jedoch in entgegengesetzter Richtung fließen kann. Weiterhin ist in der Schaltstellung 2 ein Rückfluss von Drucköl aus dem hinter dem Mehrwegeventil 38 befindlichen Abschnitt der Bremsleitung 10 bzw. dem Abschnitt 10c zurück zum Hauptbremszylinder 4 gesperrt. Diese Anordnung stellt sicher, dass bei einer Schlingerbewegung einerseits der im EHS-Zusatzdruckölspeicher 36 befindende Vorrat an Drucköl in die Bremsleitung 10, 11 in Richtung Radbremsen 7a, 7b, 8a, 8b gefördert werden kann, nicht jedoch in umgekehrter Richtung in Richtung Hauptbremszylinder 4. Weiterhin wird hierdurch sichergestellt, dass auch beim Betätigen des EHS-Systems jederzeit zusätzlich Drucköl aus dem Hauptbremszylinder 4 Richtung Radbremsen 7a, 7b, 8a, 8b gefördert werden kann, so dass die Bremsbereitschaft jederzeit erhalten bleibt.

Die Betätigung des EHS-Zylinders 32 erfolgt über zwei EHS-Steuerventile 40, 41. Es handelt sich hierbei um 2/2-Wegeventile, die elektromagnetisch über die elektronische Steuereinrichtung 12 betätigt werden. Das Steuerventil 40 ist in einer Steuerleitung 42 angeordnet, welche mit dem Niederdruckspeicher 24 verbunden ist. Das Steuerventil 41 ist in einer Steuerleitung 43 angeordnet, welche mit dem Hochdruckspeicher 26 verbunden ist. Die beiden Steuerleitungen 42, 43 sind mit einer gemeinsamen Steuerleitung 44 verbunden, welche unterhalb des Flansches 35 in den EHS-Zylinder 32 mündet.

In der Schaltstellung I ist das Steuerventil 40 auf Durchgang geschaltet, während in der Schaltstellung II der Durchfluss zum Niederdruckventil 24 gesperrt ist. In der Schaltstellung I des weiteren Steuerventils 41 ist der Durchfluss zum bzw. vom Hochdruckspeicher 26 gesperrt, während in der Schaltstellung II ein derartiger Durchfluss in beiden Richtungen möglich ist.

Soll im Fall eines Schlingerns des Anhängers eine bestimmte Seite des Anhängers automatisch abgebremst und hierzu der EHS-Kolben 33 hochgefahren werden, schaltet die elektronische Steuereinrichtung 12 die Steuerventile 40, 41 jeweils in die Schaltstellung II. Hierdurch wird Drucköl über die Steuerleitung 43 in den Zylinderraum unterhalb des Flansches 35 gepumpt, so dass dieser entgegen der Vorspannkraft der Feder 34 nach oben verschoben wird. Das Steuerventil 40 verhindert aufgrund seiner Sperrstellung, dass der hierzu erforderliche Druck nicht über die Steuerleitung 42 abgebaut wird. Soll die EHS-Betätigung der Radbremsen 7a, 7b wieder aufgehoben werden, schaltet die elektronische Steuereinrichtung 12 die Steuerventile 40, 41 wieder jeweils in die Schaltstellung I um, wobei die Feder 34 den Kolben 33 wieder nach unten drücken und das Drucköl aus dem darunter liegenden Raum über die Steuerleitung 42 in den Niederdruckspeicher 24 abgeführt werden kann.

Bei den Radsensoren 20a, 20b kann es sich um solche mit Drehrichtungserkennung handeln. In diesem Fall ist es auf besonders einfache Weise möglich, beim Rückwärtsfahren des Anhängers ein unerwünschtes Betätigen der Radbremsen 7a, 7b, 8a, 8b zu vermeiden. Erkennen die Radsensoren 20a, 20b ein Rückwärtsfahren, ist es lediglich erforderlich, dass die elektronische Steuereinrichtung 12 die ABS-Kolben 13 und/oder die EHS-Kolben 33 in diejenige Stellung verfährt, in der der ABS-Zusatzdruckölspeicher 19 und/oder EHS-Zusatzdruckölspeicher 36 vergrößert ist, wodurch Drucköl aus den Radbremsen 7a, 7b, 8a, 8b abgesaugt wird, so dass die Betätigung der Radbremsen beim Rückwärtsfahren aufgehoben wird.

Weiterhin ist es möglich, die Kugelkopfkupplung 2 als hydraulisch zuspannbare Stabilisierungskupplung auszuführen, bei der der Kugelkopf von zwei Seiten mittels gegenüberliegender Kolben mit variablem Zuspanndruck auf gesteuerte Weise eingespannt werden kann. Je nach Zuspanndruck kann hierdurch die Reibung zwischen Kugelkopf und Kugelkopfkupplung verändert werden. Die elektronische Steuereinrichtung 12 ist in diesem Fall derart mit der hydraulisch zuspannbaren Kugelkopfkupplung gekoppelt, dass beim Auftreten von Schlingerbewegungen, die vom Gierratensensor 37 erfasst werden, der Zuspanndruck erhöht wird, um ein Drehen der Kugelkopfkupplung um den Kugelkopf zu erschweren.

Durch die von der elektronisch-hydraulischen Stabilisierungseinrichtung induzierter Zuspannung der Kugelkopfkupplung 2 können Überschwingvorgänge wirksam reduziert werden. Weiterhin können durch eine derartige Kugelkopfkupplung 2 unterschiedliche Abmessungen, Schwerpunktlagen bzw. Beladungszustände des Anhängers feinfühlig ausgeglichen werden, wodurch Schlingerbewegungen unterhalb der Ansprechschwelle des eigentlichen EHS-Systems zartfühlender gedämpft werden können.

Die Zuspanndrücke orientieren sich dabei zweckmäßigerweise an dem gemessenen Druck am Hauptbremszylinder der Auflaufeinrichtung, wobei die Bremskraft des inneren Rades durch geeignete Einrichtungen unterhalb des möglichen Kraftschlussesbeiwertes der jeweiligen Fahrzeugseite gehalten wird und die Bremskraft des kurvenäußeren Rades dementsprechend über das erforderliche Drehmoment unter Berücksichtigung der aktuellen Zuspannung am Kuppelpunkt errechnet und eingesteuert wird.

Die stabilisierende Wirkung des Gespanns wird somit durch folgende Faktoren herbeigeführt:
- eine Geschwindigkeitsreduktion des Gespannes
- die Straffung des Zuges durch die ausschließliche Abbremsung des Anhängers
- differenzierte Abbremsung des kurveninneren und des kurvenäußeren Rades, und
- gegebenenfalls die gezielte Zuspannung der Kugelkopfkupplung als Dämpfung.

Alternativ zu dem beschriebenen Ausführungsbeispiel ist es auch möglich, die Zusatzdruckölspeicher 19, 36 nicht innerhalb der Zylinder 13, 32 vorzusehen, sondern hierfür eigene Behälter zu verwenden, die über die Kolben 14, 33 entsprechend beaufschlagt werden.

## Patentansprüche

1. Vorrichtung zur Verringerung von Schlingerbewegungen eines auflaufgebremsten Anhängers mit hydraulischer Bremskraftübertragungseinrichtung, mit
- einer hydraulischen Bremskraftübertragungseinrichtung, die zwischen einem Hauptbremszylinder (4) und den Radbremsen (7a, 7b; 8a, 8b) verlaufende Bremsleitungen (6, 10) umfasst,
- einem Gierratensensor (37) zur Erfassung der Schlingerbewegungen des Anhängers,
- einer elektronischen Steuereinrichtung (12) zur Abgabe von eine Betätigung der Radbremsen (7a, 7b; 8a, 8b) bewirkenden oder aufhebenden Steuersignalen,
- einer die beiden Seiten des Anhängers im Fall von Schlingerbewegungen individuell abbremsenden elektronisch-hydraulischen Stabilisierungseinrichtung (EHS), die mit einem Antiblockiersystem (ABS) kombiniert ist,
**dadurch gekennzeichnet, dass** die elektronisch-hydraulische Stabilisierungseinrichtung (EHS) für jede der beiden Seiten des Anhängers mindestens einen Kolben (33) und einen von dem jeweiligen Kolben (33) beaufschlagbaren Zusatzdruckölspeicher (36) aufweist, der mit der Bremsleitung (10, 11) der zugehörigen Anhängerseite in Verbindung steht, wobei der Kolben (33) von einer ersten Stellung, in der er keinen Zusatzdruck im Zusatzdruckölspeicher (36) und damit in der zugeordneten Bremsleitung (10, 11) erzeugt, in eine zweite Stellung verfahrbar ist, in der er Drucköl aus dem Zusatzdruckölspeicher (36) in die zugeordnete Bremsleitung (10, 11) drückt und damit die entsprechende Radbremse (7a, 7b; 8a, 8b) betätigt, wobei die Betätigung des Kolbens (33) in Abhängigkeit der vom Gierratensensor (37) abgegebenen Signale und über Öldrucksteuerleitungen (42, 43) erfolgt, die von den Bremsleitungen (10, 11) getrennt sind, und dass das Antiblockiersystem (ABS) für jede Anhängerseite mindestens einen ABS-Zylinder (13) mit einem Kolben (14) aufweist, mit dem ein zugeordnetes, in der zur jeweiligen Radbremse (7a, 7b; 8a, 8b) führenden Bremsleitung (10, 11) angeordnetes Sperrventil (15) betätigbar ist, so dass bei einem Blockieren des Rades die Zufuhr von Drucköl vom Hauptbremszylinder (4) zur Radbremse (7a, 7b; 8a, 8b) gesperrt und der Rückfluss von Drucköl aus der Radbremse (7a, 7b; 8a, 8b) in einen ABS-Zusatzdruckölspeicher (19) ermöglicht wird.

2. Vorrichtung nach Anspruch 1, **dadurch gekennzeichnet, dass** der EHS-Kolben (33) in einem EHS-Zylinder (32) angeordnet ist, der den EHS-Zusatzdruckölspeicher (36) enthält, wobei der EHS-Kolben (33) mittels einer Feder (34) in eine den EHS-Zusatzdruckölspeicher (36) maximierende Ausgangsstellung vorgespannt ist.

3. Vorrichtung nach Anspruch 1 oder 2, **dadurch gekenn** **zeichnet, dass** dem EHS-Kolben (33) ein elektromagnetisch betätigbares Mehrwegeventil (38) vorgeschaltet ist, das beim Auspumpen des EHS-Zusatzdruckölspeichers (36) den Rückfluss des Drucköls Richtung Hauptbremszylinder (4) verhindert.

4. Vorrichtung nach einem der vorhergehenden Ansprüche, **dadurch gekennzeichnet, dass** Radsensoren (20a, 20b) zur Überwachung der Drehgeschwindigkeit der einzelnen Räder vorgesehen sind und die Betätigung der ABS-Kolben (14) in Abhängigkeit der von den Radsensoren (20a, 20b) abgegebenen Signale und über ABS-Öldrucksteuerleitungen (23, 25) erfolgt, die von den Bremsleitungen (10, 11) getrennt sind.

5. Vorrichtung nach Anspruch 4, **dadurch gekennzeichnet, dass** der ABS-Kolben (14) in einem ABS-Zylinder (13) angeordnet ist, der den ABS-Zusatzdruckölspeicher (19) enthält, dass der ABS-Kolben (14), vorzugsweise mittels einer Feder (18), in eine den ABS-Zusatzdruckölspeicher (19) minimierende erste Stellung bewegbar ist, in welcher der ABS-Kolben (14) das ABS-Sperrventil (15) öffnet, so dass der Durchfluss von Drucköl zwischen Hauptbremszylinder (4) und Radbremse (7a, 7b; 8a, 8b) freigegeben ist, und dass der ABS-Kolben (14) über die ABS-Druckölsteuerleitungen (23, 25) in eine zweite Stellung bewegbar ist, in welcher das ABS-Sperrventil (15) die Bremsleitung (10, 11) verschließt und der ABS-Zusatzdruckölspeicher (19) vergrößert ist, wobei der ABS-Zusatzdruckölspeicher (19) mit den Radbremsen (7a, 7b; 8a, 8b) in Fluidverbindung ist.

6. Vorrichtung nach einem der vorhergehenden Ansprüche, **dadurch gekennzeichnet, dass** der ABS-Kolben (14) in die die Bremsleitung (10, 11) offenhaltende erste Stellung mittels einer Feder (18) vorgespannt ist, deren Vorspannkraft kleiner als die vom Drucköl beim maximal zulässigen Bremsdruck auf den ABS-Kolben (14) aufgebrachte, der Federvorspannung entgegenwirkende Kraft ist.

7. Vorrichtung nach einem der Ansprüche 4 bis 6, **dadurch gekennzeichnet, dass** die Radsensoren (20a, 20b) mit einer Drehrichtungserkennungseinrichtung ausgestattet sind und die ABS-Kolben (14) und/oder die EHS-Kolben (13) im Fall des Rückwärtsfahrens des Anhängers über die ABS-Öldrucksteuerleitungen (23, 25) bzw. EHS-Öldrucksteuerleitungen (42, 43) in die zweite Stellung verfahren werden, in der der ABS-Zusatzdruckölspeicher (19) und/oder EHS-Zusatzdruckölspeicher (36) vergrößert ist.

## Claims

1. Apparatus for reducing swaying movements of a trailer with an overrun brake, having a hydraulic brake-force transmission device, having
- a hydraulic brake-force transmission device which comprises brake lines (6, 10) which extend between a brake master cylinder (4) and the wheel brakes (7a, 7b; 8a, 8b),
- a yaw-rate sensor (37) for detecting the swaying movements of the trailer,
- an electronic control device (12) for outputting control signals which bring about or cancel actuation of the wheel brakes (7a, 7b; 8a, 8b),
- an electronic/hydraulic stabilization device (EHS) which brakes the two sides of the trailer individually in the case of swaying movements and is combined with an anti-lock brake system (ABS),
**characterized in that** the electronic/hydraulic stabilization device (EHS) has, for each of the two sides of the trailer, at least one piston (33) and one additional pressurized-oil reservoir (36) which can be acted on by the respective piston (33), which additional pressurized-oil reservoir (36) is connected to the brake line (10, 11) of the respective trailer side, it being possible to displace the piston (33) from a first position, in which it does not generate additional pressure in the additional pressurized-oil reservoir (36) and thus in the associated brake line (10, 11), into a second position, in which it presses pressurized oil out of the additional pressurized-oil reservoir (36) into the associated brake line (10, 11) and thus actuates the corresponding wheel brake (7a, 7b; 8a, 8b), the piston (33) being actuated as a function of the signals which are output by the yaw-rate sensor (37) and via oil-pressure control lines (42, 43) which are separate from the brake lines (10, 11), and **in that** the anti-lock brake system (ABS) has at least one ABS cylinder (13) with a piston (14) for each trailer side, using which ABS cylinder (13) it is possible to actuate an assigned shut-off valve (15) which is arranged in the brake line (10, 11) which leads to the respective wheel brake (7a, 7b; 8a, 8b), with the result that, if the wheel locks, the flow of pressurized oil from the brake master cylinder (4) to the wheel brake (7a, 7b; 8a, 8b) is shut off and the return flow of pressurized oil is made possible out of the wheel brake (7a, 7b; 8a, 8b) into an ABS additional pressurized-oil reservoir (19).

2. Apparatus according to Claim 1, **characterized in that** the EHS piston (33) is arranged in an EHS cylinder (32) which contains the EHS additional pressurized-oil reservoir (36), the EHS piston (33) being prestressed by means of a spring (34) into an initial position which maximizes the EHS additional pressurized-oil reservoir (36).

3. Apparatus according to Claim 1 or 2, **characterized in that** an electromagnetically actuable multiway valve (38) is connected ahead of the EHS piston (33), which multiway valve (38) prevents the pressurized oil from flowing back in the direction of the brake master cylinder (4) when the EHS additional pressurized-oil reservoir (36) is pumped out.

4. Apparatus according to one of the preceding claims, **characterized in that** wheel sensors (20a, 20b) are provided for monitoring the rotational speed of the individual wheels, and the ABS pistons (14) are actuated as a function of the signals which are output by the wheel sensors (20a, 20b) and via ABS oil-pressure control lines (23, 25) which are separate from the brake lines (10, 11).

5. Apparatus according to Claim 4, **characterized in that** the ABS piston (14) is arranged in an ABS cylinder (13) which contains the ABS additional pressurized-oil reservoir (19), **in that** the ABS piston (14) can be moved, preferably by means of a spring (18), into a first position which minimizes the ABS additional pressurized-oil reservoir (19), in which first position the ABS piston (14) opens the ABS shut-off valve (15), with the result that the throughflow of pressurized oil between the brake master cylinder (4) and the wheel brake (7a, 7b; 8a, 8b) is enabled, and **in that** the ABS piston (14) can be moved via the ABS pressurized-oil control lines (23, 25) into a second position, in which the ABS shut-off valve (15) shuts off the brake line (10, 11) and the ABS additional pressurized-oil reservoir (19) is enlarged, the ABS additional pressurized-oil reservoir (19) being fluid-connected to the wheel brakes (7a, 7b; 8a, 8b).

6. Apparatus according to one of the preceding claims, **characterized in that** the ABS piston (14) is prestressed by means of a spring (18) into the first position which holds the brake line (10, 11) open, the prestressing force of the said spring (18) being lower than the force which is applied to the ABS piston (14) by the pressurized oil at the maximum permissible brake pressure and which acts counter to the prestressing of the spring.

7. Apparatus according to one of Claims 4 to 6, **characterized in that** the wheel sensors (20a, 20b) are equipped with a rotational-direction recognition device and the ABS pistons (14) and/or the EHS pistons (13) are moved into the second position via the ABS oil-pressure control lines (23, 25) or the EHS oil-pressure control lines (42, 43) in the event that the trailer is driven backwards, in which second position the ABS additional pressurized-oil reservoir (19) and/or the EHS additional pressurized-oil reservoir (36) are/is enlarged.

## Revendications

1. Dispositif pour réduire des mouvements de roulis d'une remorque freinée par inertie avec un système hydraulique de transmission de force de freinage, comportant
- un système hydraulique de transmission de force de freinage qui comprend des conduites de frein (6, 10) s'étendant entre un maître-cylindre de frein (4) et les freins de roue (7a, 7b ; 8a, 8b),
- un détecteur de taux de lacet (37) pour détecter les mouvements de roulis de la remorque,
- un système de commande électronique (12) pour émettre des signaux de commande qui provoquent ou annulent un actionnement des freins de roue (7a, 7b ; 8a, 8b),
- un système de stabilisation électronique-hydraulique (EHS) qui freine individuellement les deux côtés de la remorque en cas de mouvements de roulis et qui est combiné avec un système d'anti-blocage (ABS),
**caractérisé en ce que** le système de stabilisation électronique-hydraulique (EHS) comprend, pour chacun des deux côtés de la remorque, au moins un piston (33) et un réservoir à huile sous pression supplémentaire (36) susceptible d'être alimenté par le piston respectif (33) et en communication avec la conduite de frein (10, 11) du côté associé de la remorque, et le piston (33) est déplaçable depuis une première position dans laquelle il ne génère pas de pression supplémentaire dans le réservoir à huile sous pression supplémentaire (36) et ainsi dans la conduite de frein associée (10, 11), jusque dans une deuxième position dans laquelle il refoule de l'huile sous pression hors du réservoir à huile sous pression supplémentaire (36) dans la conduite de frein associée (10, 11) et actionne ainsi le frein de roue correspondant (7a, 7b ; 8a, 8b), l'actionnement du piston (33) s'effectuant en fonction des signaux émis par le détecteur de taux de lacet (37) et via des conduites de commande de pression d'huile (42, 43) qui sont séparées des conduites de frein (10, 11), et **en ce que** le système d'anti-blocage (ABS) comprend pour chaque côté de la remorque au moins un cylindre d'anti-blocage (13) comportant un piston (14) susceptible d'actionner une valve d'arrêt (15) associée agencée dans la conduite de frein (10, 11) menant vers le frein de roue respectif (7a, 7b ; 8a, 8b), de sorte qu'en cas de blocage de la roue l'alimentation en huile sous pression depuis le maître-cylindre (4) vers le frein de roue (7a, 7b ; 8a, 8b) est arrêtée et le reflux d'huile sous pression depuis le frein de roue (7a, 7b ; 8a, 8b) vers un réservoir à huile sous pression supplémentaire d'anti-blocage (19) est possible.

2. Dispositif selon la revendication 1, **caractérisé en ce que** le piston de système de stabilisation (33) est agencé dans un cylindre de système de stabilisation (32) qui comprend le réservoir à huile sous pression supplémentaire de système de stabilisation (36), le piston de système de stabilisation (33) étant précontraint par un ressort (34) dans une position de départ qui maximise le réservoir à huile sous pression supplémentaire de système de stabilisation (36).

3. Dispositif selon l'une ou l'autre des revendications 1 et 2, **caractérisé en ce qu'**en avant du piston de système de stabilisation (33) est prévue une valve à plusieurs voies (38) à actionnement électromagnétique, qui, lors du pompage de l'huile hors du réservoir à huile sous pression supplémentaire de système de stabilisation (36), empêche le reflux de l'huile sous pression en direction du maître-cylindre de frein (4).

4. Dispositif selon l'une des revendications précédentes, **caractérisé en ce qu'**il est prévu des détecteurs de roue (20a, 20b) pour surveiller la vitesse de rotation des roues individuelles, et l'actionnement des pistons d'anti-blocage (14) s'effectue en fonction des signaux émis par les détecteurs de roue (20a, 20b) et via des conduites de commande de pression d'huile d'anti-blocage (23, 25) qui sont séparées des conduites de frein (10, 11).

5. Dispositif selon la revendication 4, **caractérisé en ce que** le piston d'anti-blocage (14) est agencé dans un cylindre d'anti-blocage (13) qui comprend le réservoir à huile sous pression supplémentaire d'antiblocage (19), **en ce que** le piston d'anti-blocage (14) est déplaçable de préférence au moyen d'un ressort (18) jusque dans une première position qui minimise le réservoir à huile sous pression supplémentaire d'anti-blocage (19) et dans laquelle le piston d'anti-blocage (14) ouvre la valve d'arrêt d'anti-blocage (15), de sorte que le passage d'huile sous pression entre le maître-cylindre de frein (4) et le frein de roue (7a, 7b ; 8a, 8b) est libéré, et **en ce qu'**au moyen des conduites de commande d'huile sous pression d'anti-blocage (23, 25) le piston d'anti-blocage (14) est déplaçable dans une deuxième position dans laquelle la valve d'arrêt d'anti-blocage (15) referme la conduite de frein (10, 11) et le réservoir à huile de pression supplémentaire d'anti-blocage (19) est agrandi, le réservoir à huile de pression supplémentaire d'anti-blocage (19) étant en communication fluidique avec les freins de roue (7a, 7b ; 8a, 8b).

6. Dispositif selon l'une des revendications précédentes, **caractérisé en ce que** le piston d'anti-blocage (14) est précontraint au moyen d'un ressort (18) vers la première position qui maintient ouverte la conduite de freinage (10, 11), ressort dont la force de précontrainte est inférieure à la force opposée à la précontrainte du ressort et fournie par l'huile sous pression à la pression de freinage maximale admissible sur le piston d'anti-blocage (14).

7. Dispositif selon l'une des revendications 4 à 6, **caractérisé en ce que** les détecteurs de roue (20a, 20b) sont munis d'un dispositif de reconnaissance de sens de rotation, et **en ce qu'**en cas de marche arrière de la remorque, les pistons d'anti-blocage (14) et/ou les pistons de stabilisation (13) sont déplacés au moyen des conduites de commande de pression d'huile d'anti-blocage (23, 25) ou au moyen des conduites de commande de pression d'huile de stabilisation (42, 43) jusque dans la deuxième position dans laquelle le réservoir à huile sous pression supplémentaire d'anti-blocage (19) et/ou le réservoir à huile sous pression supplémentaire de stabilisation (36) est agrandi.
